# EUROPEAN PATENT SPECIFICATION

(11) **EP 2 907 264 B1**
(45) Date of publication and mention of the grant of the patent: **11.08.2021**
(21) Application number: 12886782.7
(22) Date of filing: 15.10.2012
(51) Int. Cl.: H04L 12/18

(54) **A UE, A BM-SC, A STATUS MANAGEMENT SERVER, A LOAD BALANCING SERVER AND A FILE REPAIR SERVER AND RESPECTIVE METHODS THEREIN ARE PROVIDED FOR FILE REPAIR PROCEDURE**
BENUTZEREINHEIT, BM-SC, STATUSVERWALTUNGSSERVER, LASTAUSGLEICHSSERVER UND DATEIREPARATURSERVER SOWIE ENTSPRECHENDE VERFAHREN DARIN ZUR DATEIREPARATUR
UE, BM-SC, SERVEUR DE GESTION D'ÉTAT, SERVEUR D'ÉQUILIBRAGE DE CHARGE ET SERVEUR DE RÉPARATION DE FICHIERS, ET PROCÉDÉS RESPECTIFS DANS CEUX-CI POUR PROCÉDURE DE RÉPARATION DE FICHIERS

(43) Date of publication of application: 19.08.2015
(73) Proprietor: Telefonaktiebolaget LM Ericsson (publ), 164 83 Stockholm (SE)
(72) Inventor: LONG, Hongxia, Suzhou Jiangsu 215300 (CN)
(74) Representative: Zacco Sweden AB
(86) International application number: PCT/CN2012/082977
(87) International publication number: WO 2014/059582

(56) References cited:
- CN-A- 1 489 069
- CN-A- 101 001 162
- CN-A- 101 262 627
- CN-A- 101 262 627
- CN-A- 101 304 366
- CN-A- 101 304 366
- US-A1- 2010 050 032
- THOMAS STOCKHAMMER ET AL: "DVB-IPTV content download services-overview and use cases", MULTIMEDIA TOOLS AND APPLICATIONS, KLUWER ACADEMIC PUBLISHERS, BO, vol. 53, no. 3, 30 March 2010 (2010-03-30) , pages 533-555, XP019897810, ISSN: 1573-7721, DOI: 10.1007/S11042-010-0505-3
- "3rd Generation Partnership Project; Technical Specification Group Services and System Aspects; Multimedia Broadcast/Multicast Service (MBMS); Protocols and codecs (Release 11)", 3GPP STANDARD; 3GPP TS 26.346, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V11.2.0, 13 September 2012 (2012-09-13), pages 1-158, XP050649333, [retrieved on 2012-09-13]
- "Digital Video Broadcasting (DVB); IP Datacast over DVB-H: Content Delivery Protocols European Broadcasting Union Union Européenne de Radio-Télévision EBUÜER; ETSI TS 102 472", IEEE, LIS, SOPHIA ANTIPOLIS CEDEX, FRANCE, vol. BC, no. V1.2.1, 1 December 2006 (2006-12-01), XP014039809, ISSN: 0000-0001
- HWA-CHUN LIN ET AL: "Placement of repair servers to support server-based reliable multicast", ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 6, 11 June 2001 (2001-06-11), pages 1802-1806, XP010553178, DOI: 10.1109/ICC.2001.937102 ISBN: 978-0-7803-7097-5

## Description

### Technical field

The present disclosure relates to broadcasting/multicasting and in particular to file repair following a broadcasting/multicasting session.

### Background

Multimedia Broadcast and Multicast Services, MBMS, is a broadcasting service offered via cellular networks. Enhanced MBMS, eMBMS, is used to denominate MBMS service in Evolved Packet Systems including Evolved Universal Terrestrial Radio Access Network, E-UTRAN, for Long Term Evolution, LTE, cellular networks and UTRAN for e.g. Universal Mobile Telecommunications System, UMTS, cellular networks.

MBMS file download can be used to deliver an arbitrary number of data files from a single source to many receivers. MBMS Download may use the FLUTE, File Transport over Unidirectional Transport, protocol for file delivery. FLUTE is designed for massive file delivery over unidirectional links such as for digital broadcasts. Since HTTP and TCP are not feasible for point-to-multipoint communication, a newly developed protocol is used.

After an MBMS bearer is established, a Broadcast Multicast - Service Centre, BM-SC, starts transmitting or broadcasting the actual MBMS data. The BM-SC can send one or more files using MBMS. All files require an entry in the FLUTE File Delivery Table, FDT, which are provided using FLUTE FDT Instances. The receiving client that receives the broadcast or multicast is called a MBMS client or a User Equipment, UE. In this disclosure, a UE is used to denote any type of equipment capable of receiving the MBMS transmission.

MBMS makes use of Forward Error Correction, FEC, in order for the UE to be able to repair a certain amount of errors that has occurred during the MBMS transmission or session. However, in case there are too many errors, the UE may not be capable of recovering the received data and must instead request a file repair procedure.

The file repair procedure comprises in brief the UE determining that it needs to request the file repair procedure and the UE randomly selects a File Repair Server out of available File Repair Servers and sends a request for file repair to the selected File Repair Server. When the selected File Repair Server receives the request for file repair, the File Repair Server determines if it is able to engage in the file repair procedure, and if not the File Repair server will send an error message back to the UE, which then has to select another File Repair Server and send a new request for file repair to that File Repair Server.

In the case the first selected File Repair Server is unable to engage in the file repair procedure, and the UE has to select a new File Repair Server and send a new request for file repair, an increased delay will occur from when the UE determines that it needs to request the file repair procedure until the file repair procedure has been successfully performed. Further, additional signalling over the air is introduced since the UE has to send more than one request for file repair and at least one File Repair Server has to send an error message to the UE. US 2010/050032 A1 describes a repair control device for selecting a repair server among a plurality of repair servers. THOMAS STOCKHAMMER ET AL: "DVB-IPTV content download services-overview and use cases," MULTIMEDIA TOOLS AND APPLICATIONS, KLUWER ACADEMIC PUBLISHERS, BO, vol. 53, no. 3, 30 March 2010 (2010-03-30), pages 533 - 555, XP019897810, ISSN: 1573-7721, DOI: 10.1007/S11042-010-0505-3 introduces Content Download Services (CDSs) within IPTV services in the Digital Video Broadcast (DVB) Project and describes various business models and use cases. "3rd Generation Partnership Project; Technical Specification Group Services and System Aspects; Multimedia Broadcast/Multicast Service (MBMS); Protocols and codecs (Release 11)" 3GPP STANDARD; 3GPP TS 26.346, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG4, no. V11.2.0, 13 September 2012 (2012-09-13), pages 1 - 158, XP050649333 defines Stage 2 service description for the Evolved 3GPP Packet Switched Domain-also known as the Evolved Packet System (EPS). "Digital Video Broadcasting (DVB); IP Datacast over DVB-H: Content Delivery Protocols European Broadcasting Union Union Europeenne de Radio-Television EBUDER; ETSI TS 102 472," IEEE, LIS, SOPHIA ANTIPOLIS CEDEX, FRANCE, vol. BC, no. V1.2.1, 1 December 2006 (2006-12-01), XP014039809, ISSN: 0000-0001 defines a set of Content Delivery Protocols for streaming and file delivery services to be used with IP Datacast over DVB-H. CN 101262627 A describes a file recovery system that realizes a file repair method by setting file repair servers in the network, a UE randomly choosing a file repair server, and then executing a file repair procedure. CN 101304366 A describes a method for realizing load balance in packet networks by obtaining load status of at least two target network elements and selecting a non-faulty target network element. HWA-CHUN LIN ET AL: "Placement of repair servers to support server-based reliable multicast," ICC 2001. 2001 IEEE INTERNATIONAL CONFERENCE ON COMMUNICATIONS. CONFERENCE RECORD. HELSINKY, FINLAND, JUNE 11 - 14, 2001; ISBN: 978-0-7803-7097-5 describes a method for placement of repair servers, such as routers or specially designed host co-located with a router for local recovery to reduce latency for receiving recovery packets.

### Summary

The invention is defined by the independent claims. Additional features of the invention are provided in the dependent claims. The object is to obviate at least some of the problems outlined above. In particular, it is an object to provide a UE and a method therein for initiating a file repair procedure following a Multimedia Broadcast/Multicast service, a File Repair Server and a method therein for updating a Status Management Server regarding a current status of the File Repair Server, a Load Balancing Server and a method therein for selecting a File Repair Server to perform a file repair procedure, a Status Management Server and a method therein for balancing a load of at least two File Repair Servers, and a BM-SC and a method therein for informing a UE about a current load and capacity of File Repair Servers available for the UE for a file repair procedure. These objects and others may be obtained by providing a UE, a File Repair Server, a Load Balancing Server, a Status Management Server, a BM-SC and respective methods in a UE, a File Repair Server, a Load Balancing Server, a Status Management Server, and a BM-SC according to the independent claims attached below.

According to an aspect a method in, or performed by, a UE for initiating a file repair procedure following a Multimedia Broadcast/Multicast Service session is s provided. The method comprises receiving, from a BM-SC, a status update message comprising information on load and capacity of available File Repair Servers for the UE. The status update message is received by means of an Association Delivery Procedure Description, ADPD, instance. The ADPD instance comprises information about a change that a new File Repair Server is made available due to load corresponding to the new File Repair Server dropping below a threshold. The method further comprises selecting at least one File Repair Server from the available file repair servers, to send a file repair request for the file repair procedure, based on the information carried in the status update message; and sending the file repair request to the selected at least one File Repair Server.

The method further comprises that the status update message is received by means of an Association Delivery Procedure Description, ADPD, instance.

Furthermore, the method comprises that the ADPD instance is transmitted by the BM-SC to the UE when there is a change associated with at least one of the available File Repair Servers, where the change comprises that a new File Repair Server is made available due to load corresponding to the new File Repair Server dropping below a threshold.

Moreover, the method comprising selecting at least one File Repair Server from the available File Repair Servers, to send a file repair request for the file repair procedure, based on the information carried in the status update message.

Further, the method comprises sending the file repair request to the selected at least one File Repair Server.

According to an aspect, a system comprising a UE and a BM-SC, adapted for initiating a file repair procedure following a Multimedia Broadcast/Multicast service session is provided. The UE comprises a processing unit and a memory capable of storing instructions which when executed by the processing unit causes the processing unit to receive, from the BM-SC a status update message comprising information on load and capacity of File Repair Servers available for the UE.

The status update message is received by means of an Association Delivery Procedure Description, ADPD, instance.

Further, the ADPD instance is transmitted by the BM-SC to the UE when there is a change associated with at least one of the available File Repair Servers, and wherein the change comprises that a new File Repair Server is made available due to load corresponding to the new File Repair Server dropping below a threshold.

The system comprising the UE and the BM-SC, where the UE comprises the processing unit and the memory capable of storing instructions which when executed by the processing unit further causes the processing unit to select at least one File Repair Server from the available File Repair Servers, to send a file repair request for the file repair procedure, based on the information carried in the status update message.

The system comprising the UE and the BM-SC, where the UE comprises the processing unit and the memory capable of storing instructions which when executed by the processing unit further causes the processing unit to send the file repair request to the selected at least one File Repair Server.

As will be appreciated by a person skilled in the art, the embodiments which are not directly or indirectly covered by the claims and do not fall under the scope of the claimed invention, should be considered as examples.

### Brief description of drawings

Embodiments will now be described in more detail in relation to the accompanying drawings, in which:
Figure 1 is a flowchart of a method in a UE for initiating a file repair procedure according to an exemplifying embodiment.
Figure 2 is a flowchart of a method in a File Repair Server for updating a Status Management Server regarding a current status of the File Repair Server according to an example.
Figure 3 is a flowchart of a method in a Load Balancing Server for selecting a File Repair Server to perform a file repair procedure according to an example.
Figure 4 is a flowchart of a method in a Status Management Server for balancing a load of at least two File Repair Servers according to an example.
Figure 5 is a flowchart of a method in a BM-SC for informing a UE about a current load and/or capacity of File Repair Servers available for the UE for a file repair procedure according to an example.
Figure 6 is a block diagram of a UE adapted for initiating a file repair procedure according to an exemplifying embodiment.
Figure 7 is a block diagram of a File Repair Server adapted for updating a Status Management Server regarding a current status of the File Repair Server according to an example.
Figure 8 is a block diagram of a Load Balancing Server adapted for selecting a File Repair Server to perform a file repair procedure according to an example.
Figure 9 is a block diagram of a Status Management Server adapted for balancing a load of N File Repair Servers according to an example.
Figure 10 is a block diagram of a BM-SC adapted for informing a UE about a current load and/or capacity of File Repair Servers available for the UE for a file repair procedure according to an example.
Figure 11 is a schematic illustration of a UE, a BM-SC, a Status Management Server and two pools or groups of File Repair Servers.

### Detailed description

Briefly described, apparatuses and respective methods are provided for distributing a traffic load of a plurality of File Repair Servers in order to reduce the risk of overload in one or more File Repair Servers causing a UE requesting file repair from an overloaded File Repair Server to receive an error message, instead of the requested data which should be provided during the file repair procedure.

A UE and a method therein are provided for initiating a file repair procedure following a Multimedia Broadcast/Multicast service session.

A File Repair Server and a method therein are provided for updating a Status Management Server regarding a current status of the File Repair Server.

A Load Balancing Server and a method therein are provided for selecting a File Repair Server to perform a file repair procedure.

A Status Management Server and a method therein are provided for balancing a load of at least two File Repair Servers.

A BM-SC and a method therein are provided for informing a UE about a current load and/or capacity of File Repair Servers available for the UE for a file repair procedure.

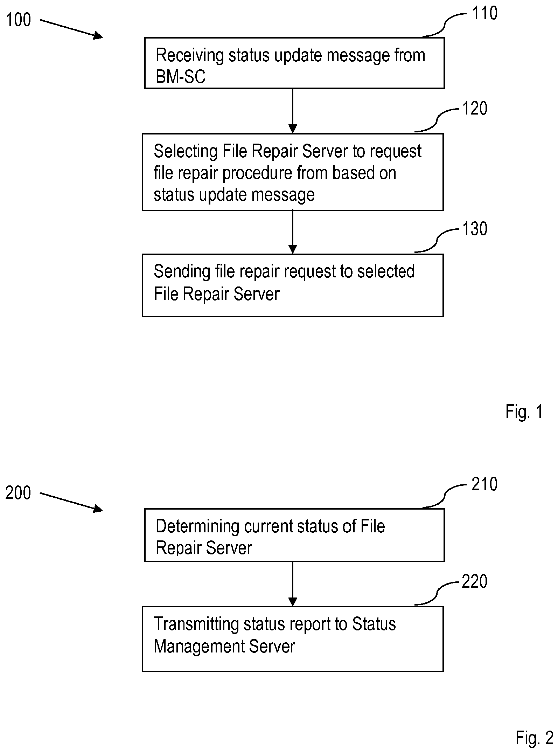

Figure 1 is a flowchart of a method in, or performed by, a UE for initiating a file repair procedure following a Multimedia Broadcast/Multicast Service session according to an exemplifying embodiment. Figure 1 illustrates the method comprising receiving 110, from a Broadcast Multicast Service Centre, BM-SC, a status update message comprising information on load and/or capacity of File Repair Servers available for the UE. The method further comprises selecting 120 a File Repair Server to request a file repair procedure from based on the status update message; and sending 130 a file repair request to the selected File Repair Server.

An MBMS session has taken place, wherein the BM-SC has broadcasted or multicasted data to the UE. The session was not entirely successful, meaning that the UE needs to perform a file repair session in order to recover data, which has been received incorrectly, or associated with errors, to such a degree that the UE cannot itself recover the data using FEC.

The UE receives a status update message comprising information on load and/or capacity of File Repair Servers available for the UE from the BM-SC. The status update message may be received before, during or after the MBMS session.

The UE has at least one File Repair Server from which the UE may request file repair. The at least one File Repair Server UE may select to request file repair from may be a real File Repair Server or virtual File Repair Server, wherein the virtual File Repair Server comprises a pool of File Repair Servers. The status update message comprises information on the current load and/or capacity of File Repair Servers available for the UE which enables the UE to select a File Repair Server, out of the available File Repair Servers, to send the request for file repair to. The UE may select e.g. the File Repair Server having the lowest load or the highest capacity, in order to increase the probability of a successful file repair session. In other words, the UE may select File Repair Server having a current load and/or capacity situation such that the probability for the File Repair Server becoming overloaded is reduced. In case the UE instead would just randomly select a File Repair Server, the selected File Repair Server might already be overloaded and the file repair request would be rejected, whereas a File Repair Server having capacity to actually perform the file repair procedure would not receive the request for file repair. Hence, the UE would have to send a new request for file repair to another File Repair Server. In this manner, diversity of the File Repair Servers with regard to e.g. different computing power, the File Repair Servers running of different software platforms, the File Repair Servers having different configurations on network throughput, system memory and storage capacity, and so on may be compensated for in order to reduce the risk for the UE receiving an error message due to a possible overload of a single File Repair Server. Further, dynamically changing load status of each server may be compensated for in the same manner and also that different types of applications may be co-located at the same server but the File Repair Server has different capacity to handle different types of services. The inbound traffic load for the different types of servers may also be different and may unequally impact the File Repair Server with regard to load and capacity.

Once the UE has selected the File Repair Server to send the file repair request to, the UE sends the file repair request to the selected File Repair Server.

It shall be pointed out that the File Repair Servers may be grouped together in one or more pool of servers. Merely as an example, there may be 15 individual File Repair Servers distributed into two pools, the first pool of File Repair Servers comprising e.g. 8 File Repair Servers and the second pool of File Repair Servers comprising 7 File Repair Servers. The status update message comprising information on load and/or capacity of File Repair Servers available for the UE received from the BM-SC indicates the current load and/or capacity of the individual pool of servers. Hence, the UE selects a pool of servers to send the request for file repair to, in this example the UE selects either the first or the second pool of File Repair Servers. Then the UE sends the request for file repair to the selected pool of File Repair Servers. The status update message from the BM-SC could thus either comprise status information per individual pool of File Repair Servers, status information per individual File Repair Servers or a combination thereof.

The File Repair Server may alternatively be a Reception Reporting Server or a Key Management Server. Correspondingly, the file repair procedure, or session, may be a reception reporting procedure or key management procedure. This means that all embodiments described herein are equally applicable for reception reporting procedures and key management procedures, wherein all the examples described herein for the File Repair Server are equally applicable to the the Reception Reporting Server or the Key Management Server.

The method in the UE has several advantages. The UE is aware of the status of individual File Repair Servers and may select a File Repair Server such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

According to an embodiment, the status update message is pushed from the BM-SC to the UE.

This means that the UE does not take any action to receive the status update message from the BM-SC to the UE. Instead, the BM-SC transmits the status update message to the UE at its own volition, i.e. the BM-SC transmits, or sends, the status update message to the UE at times determined by the BM-SC itself.

According to still an embodiment, the status update message from the BM-SC is received as a result of a foregoing request for status update information transmitted from the UE to the BM-SC.

In this manner, the UE may obtain the status of the File Repair Servers with regard to load and/or capacity by requesting the information from the BM-SC. When the UE determines that it needs the information regarding the current status of the File Repair Server, the UE transmits a request for the information to the BM-SC. The BM-SC in turn responds to the request by transmitting the status update message to the UE.

According to yet an embodiment, the status update message is received by means of an extended Associated Delivery Procedure Description, ADPD, update.

The ADPD instance is not FEC protected because it is too small in size to benefit from FEC protection. ADPD may initially be sent before broadcasting session and to ensure reliable delivery of the ADPD, the ADPD instance may be transmitted repeatedly with the same content or updated. The ADPD instance may alternatively, or additionally be sent during the broadcast session when there is a change associated with at least one of the File Repair Servers available to the UE. Then the ADPD instance will comprise information about the change. The change may for example be that a new File Repair Server is made available (e.g. due to its current load dropping below a first threshold) or a previous server is made unavailable (e.g. due to its current load has increased to exceed a second threshold). The ADPD has critical information relevant to point-to-point file repair and reception reporting reports. Since the ADPD instance may be transmitted repeatedly, it may be beneficial to use the ADPD for communicating the status update message. However, the current ADPD does not support any communication of the File Repair Server and reception reporting server status update message and hence, the ADPD is extended in order to be able to carry the File Repair Server and reception reporting server status update message.

The ADPD schema should be updated to define a ratio to be used by UE to do load balancing on each service URL, an embodiment of the updated schema is as follows, wherein the specific update is marked by cursive, bold and underlined text:

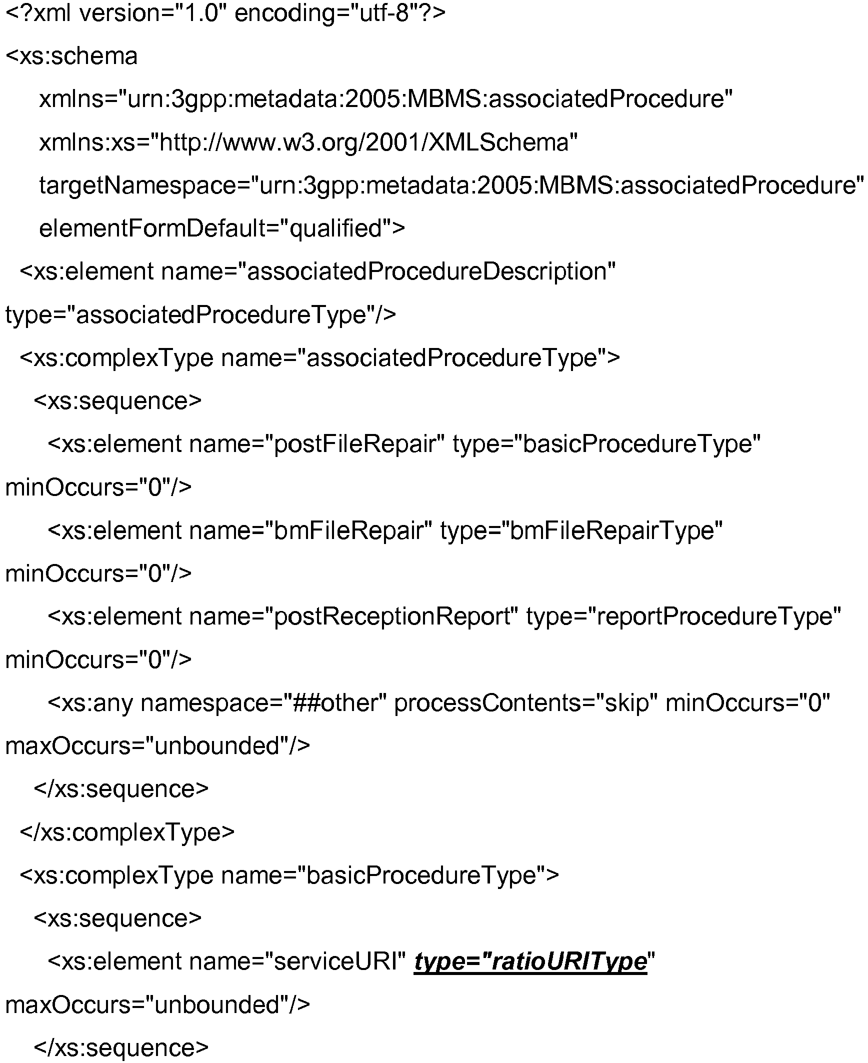

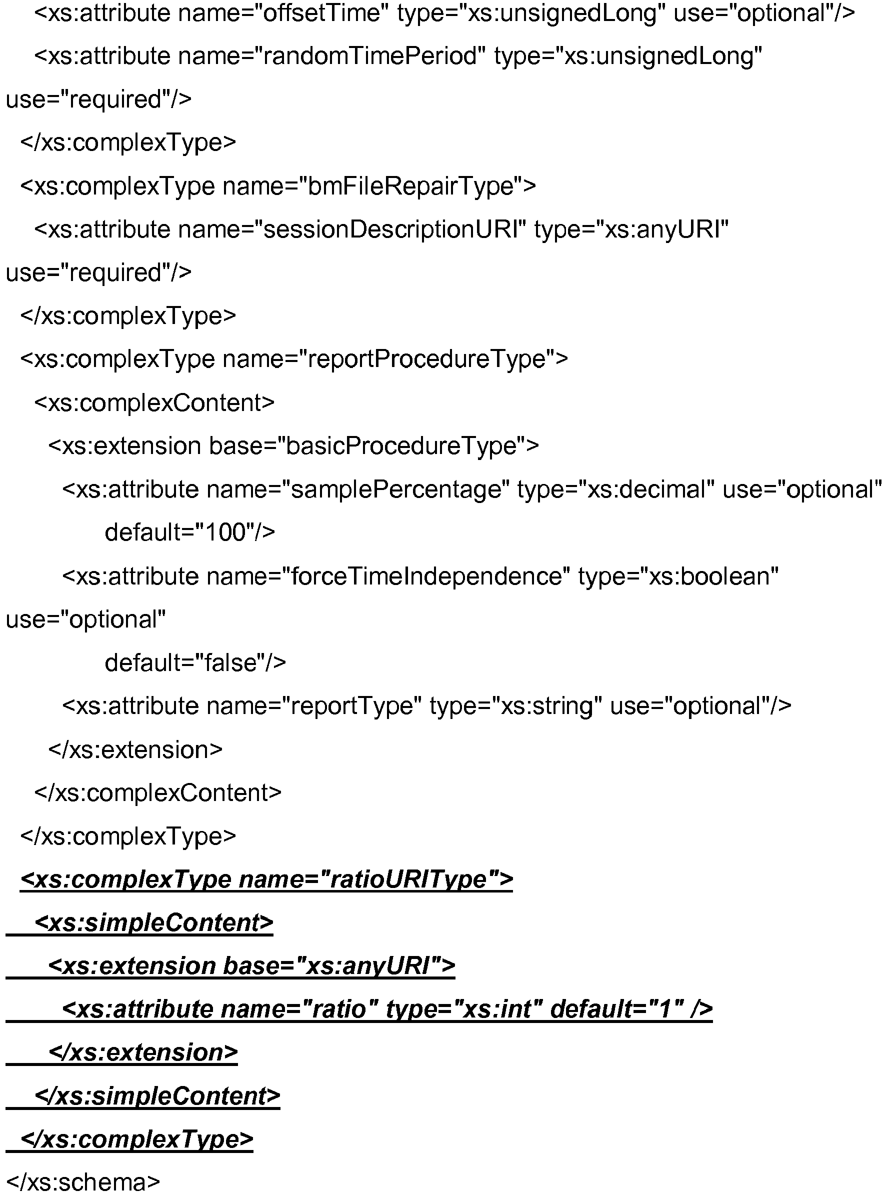

For each server in the file repair and reception reporting server list, a ratio attribute is defined to indicate the ratio of UE requests to be handled by each server. The ratio is e.g. given as integers in a first example expressing a certain weight. There above mentioned server list is a list of the File Repair Servers and reception reporting servers available to the UE for a possible file repair procedure. The weight is a way (for the Status Management Server or the BM-SC) to steer the UEs to send requests for file repair to specific servers. Merely as an example, assume a first File Repair Server has a relatively low load (10%) but also low capacity, and a second File Repair Server has medium load (50%) by very high capacity. In such a situation, the second File Repair Server having a higher individual load may still have more capacity to handle a file repair process than the first File Repair Server due to the difference in their individual total capacity. By applying weights, the UE may be influenced to be inclined to send a request for file repair to the second File Repair Server rather than to the first File Repair Server. Another embodiment of ADPD schema update is to define ratio as percentage instead of integer to express the relative weight, exemplified in the following schema update definition for SPD and the related instance. A value of 0 could indicate a remove of overloaded server. An example of the ADPD based on the above schema is as follows , wherein the first three "ratio="2", ratio="1", ratio="1" are configured for three file repair servers to follow the extended ADPD schema, and the last two ratio="1", ratio="1" in the example are configured for 2 reception reporting servers to follow the extended ADPD schema:

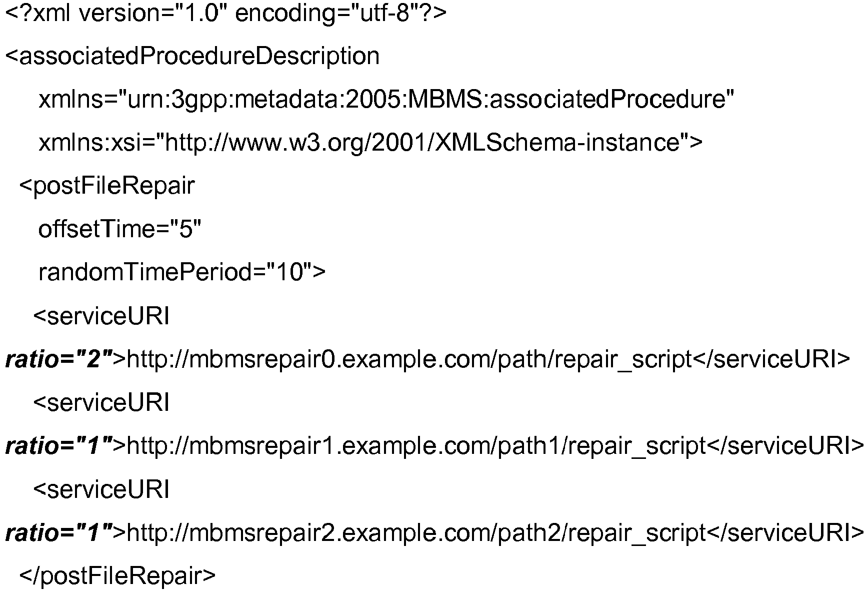

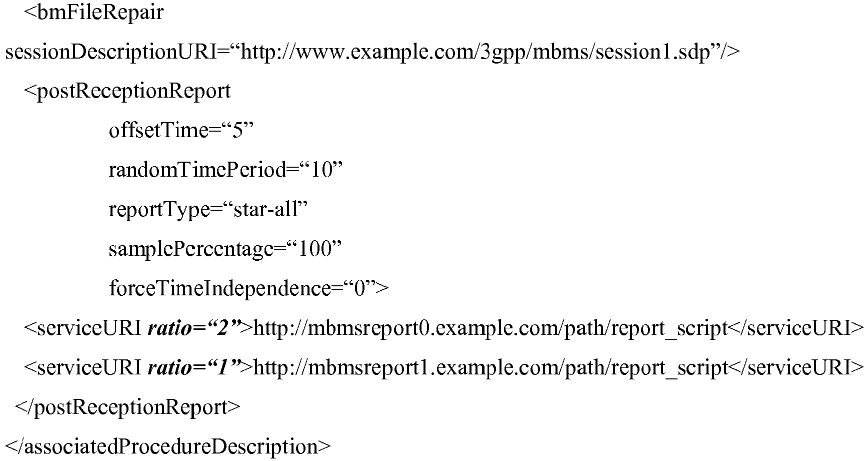

Following the extended ADPD schema, the ADPD instance sent to UE before or during the broadcast session comprises status information about the file repair and reception reporting servers embodied in the ratio attribute defined for each server. With the help of this additional status information, the UE may, in the post file repair and reception reporting server procedure, select server intelligently to improve the success ratio in the first try.

According to still an example , the status update message is received by means of an extended Service Protection Description, SPD, update.

The security description contains key identifiers and the server address to request the actual key material. To avoid overload situations, the same load balancing principles as in the associated delivery procedures are used. In this example, the SPD is extended to carry, or to be used to communicate, the status update message.

SPD (Service protection description) schema could be updated to define a ratio to be used by the UE to do load balancing on each service URL, an example of the updated schema is as follows, wherein the specific update is marked by cursive, bold and underlined text:

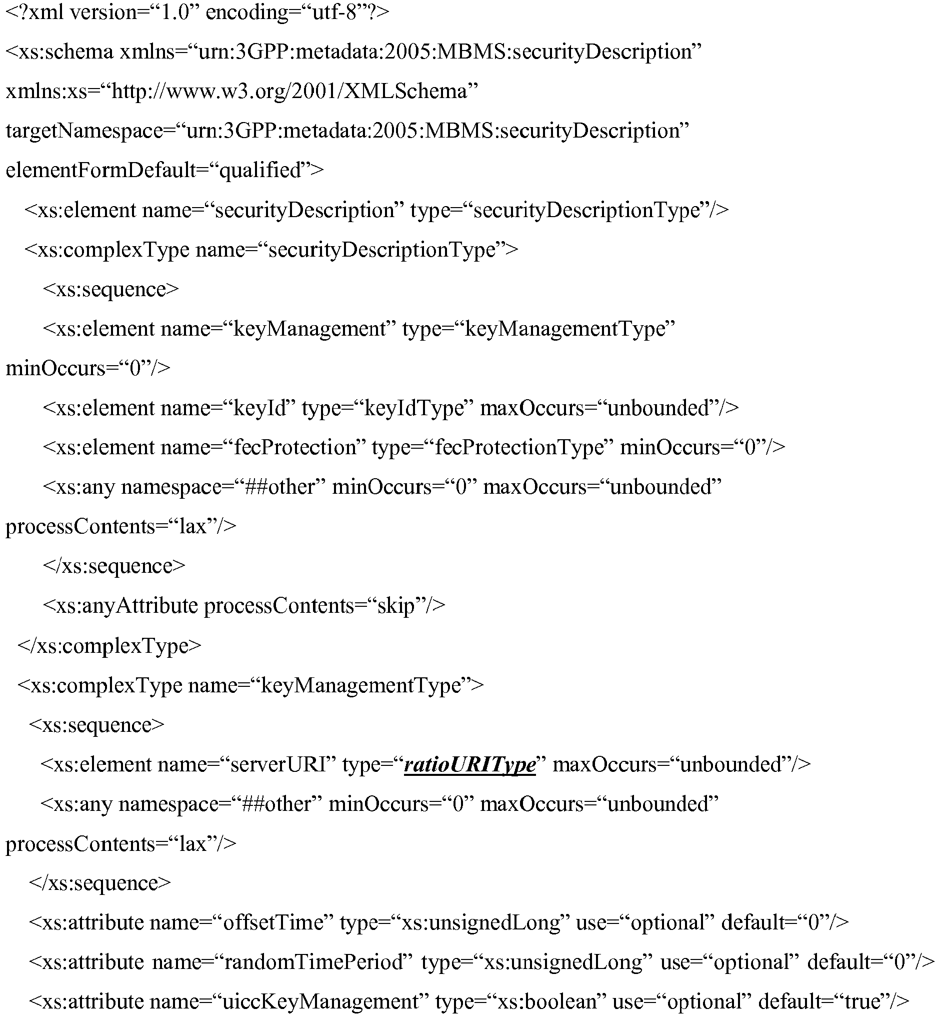

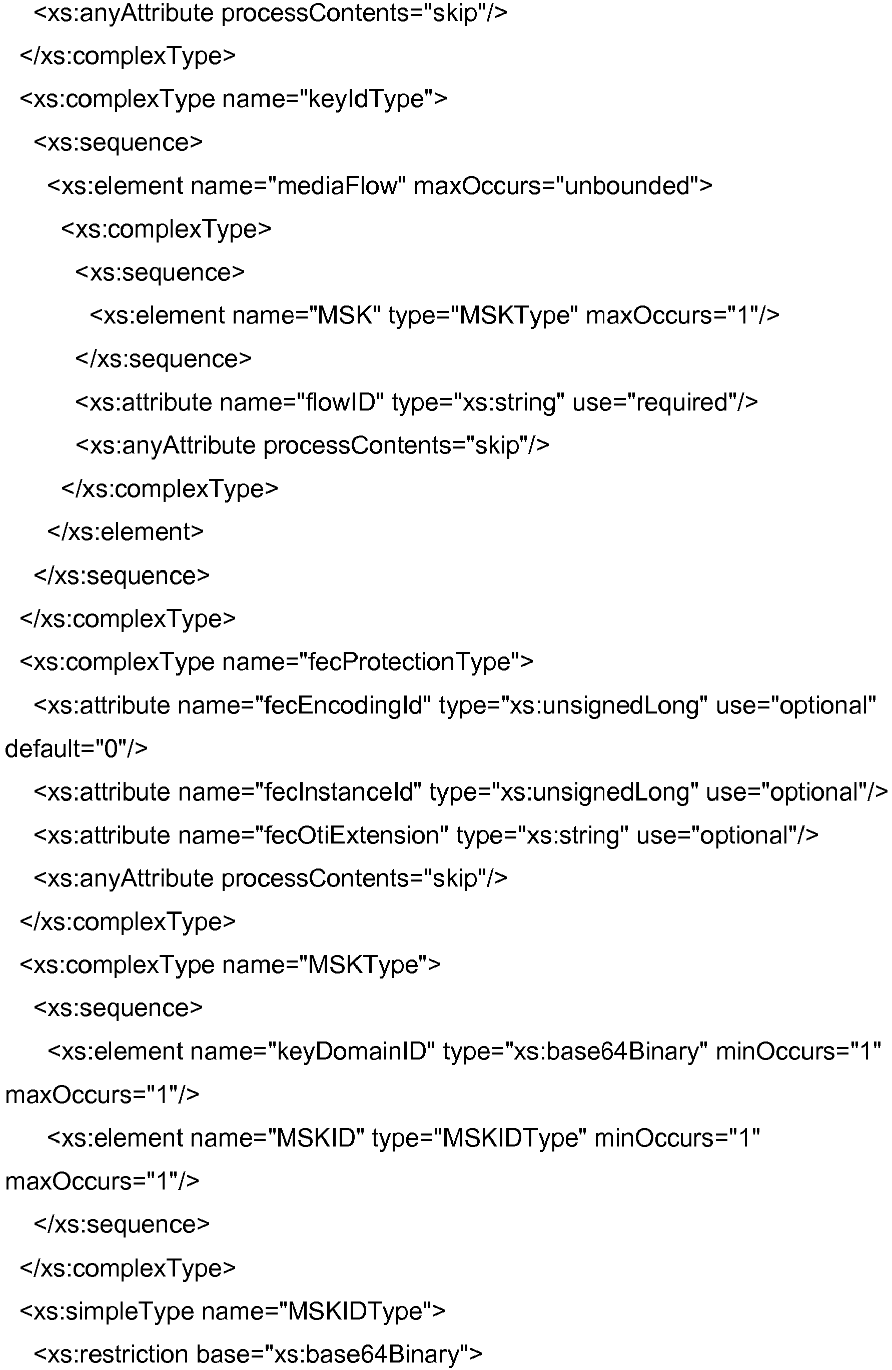

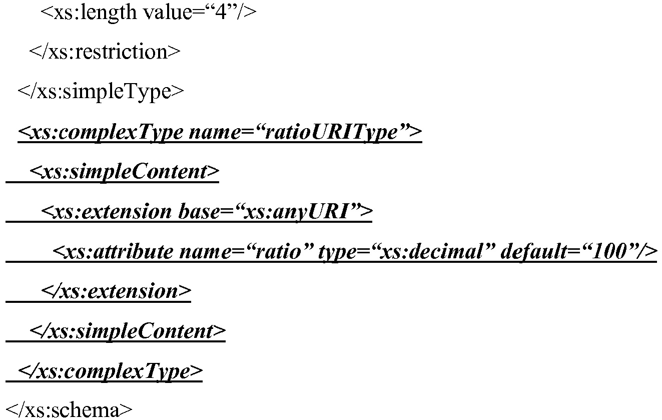

For each server in the key management server list, a ratio attribute is defined to indicate the ratio as percentage of UE key management requests to be handled by each server. Another example of the SPD schema update is to define the ratio as integer to express the relative weight. A value of 0 could indicate a remove of overloaded server. An example of the SPD based on the above schema is as follows, wherein "ratio="40" and ratio="60"" below are configured to follow the extended SPD schema:

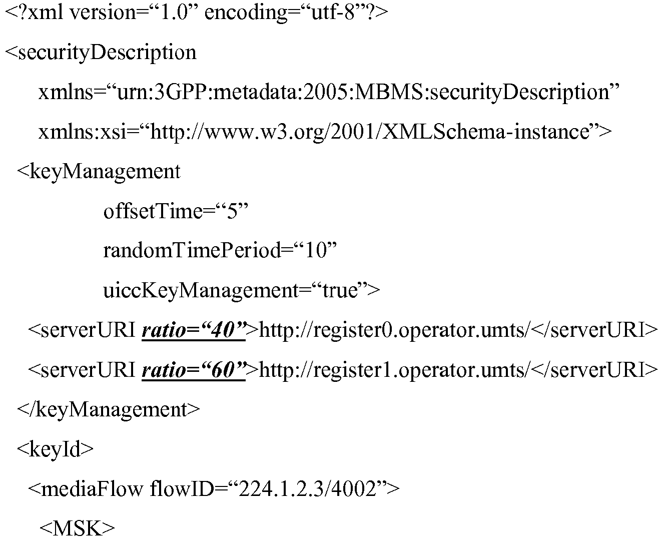

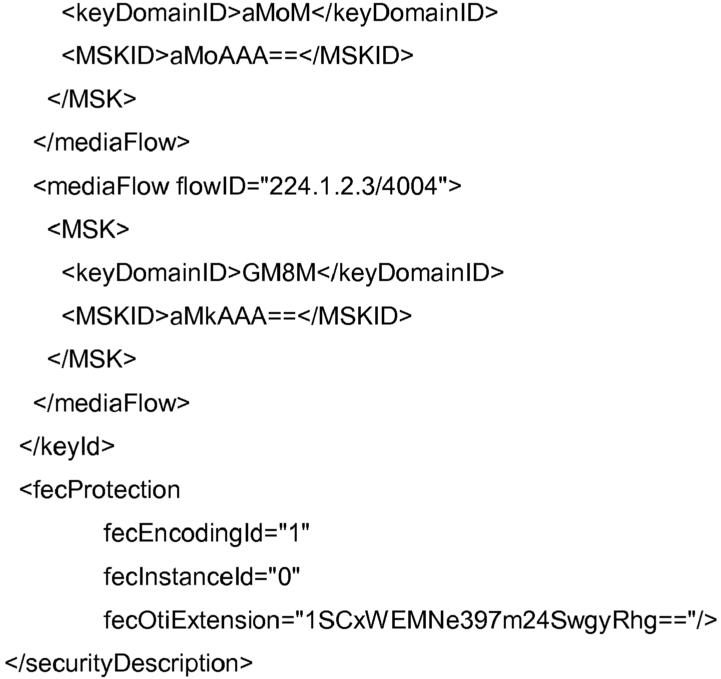

The updated ADPD fragments and SPD fragments may be transmitted to the UE by means of in-band signalling delivery, wherein the fragments are transmitted in the broadcast or multicast delivery session, i.e. the MBMS session. Alternatively, the ADPD fragments and SPD fragments may be transmitted to the UE by means of out-band signalling delivery, wherein the fragments are transmitted in a separate interactive unicast session.

Initial ratio value based on initial server status may be set and delivered to the UE with a user service announcement procedure normally in an interactive unicast session. Dynamic update of the ADPD fragments (with updated server status) and SPD fragments (with updated server status) may be delivered in-band in the broadcast delivery session, when updated fragments are received by the UE, the previous ratio will be overrode by the new one from the updated fragments.

According to an embodiment, the status update message comprises information pertaining to, for individual available File Repair Servers, a ratio of requests that is handled by individual File Repair Servers.

As described above, the status update message provides the UE with information regarding the current status for the individual File Repair Servers available to the UE. An example of a status of a File Repair Server is the load of the File Repair Server. The load of the File Repair Server may indicate a usage percentage, i.e. the load is a percentage of the capacity for the File Repair Server. The load of the File Repair Server may indicate the number of file repair session in which the File Repair Server is involved. Another example of information pertaining to the current status of the File Repair Servers is the ratio of requests that is handled by individual File Repair Servers. The ratio for a specific File Repair Server is in one example determined as the fraction of the total amount of file repair sessions, or file repair requests, which is handled for the specific File Repair Server.

Merely as an example, assume there are 5 File Repair Servers, FRS1, FRS2, FRS3, FRS4 and FRS 5 available to the UE for performing a file repair session. Assume further that there are 20 incoming file repair requests, whereof 5 goes to FRS1 (ratio 5/20), 3 goes to FRS2 (ratio 3/20), 4 goes to FRS3 (ratio 4/20), 5 goes to FRS4 (ratio 5/20) and 3 goes to FRS5 (ratio 5/20).

In another example, assume there are 4 File Repair Servers comprised in 2 pools of File Repair Servers, wherein FRS1 and FRS2 are comprised in the first pool of File Repair Servers and FRS3 and FRS4 are comprised in the second pool of File Repair Servers. Assume further that the ratio of the pools is defined as the 2:1 of first pool versus second pool but within first pool has ratio 2:1 and within the second pool has ratio 1:1., wherein the UE is configured to transmit a file repair request to two virtual address associated with both pools, i.e. the UE is aware of only two (virtual) File Repair Server but the address to the File Repair Server is actually associated with two pools of File Repair Servers and hence the File Repair Server can be said to be a virtual File Repair Server. The UE will hence transmit all requests for file repair to the two virtual File Repair Servers, wherein the above ratios distribute the incoming requests for file repair such that 2/3 of the incoming requests are forwarded to the first pool and the remaining 1/3 of the incoming requests are forwarded to the second pool. Assume further, that within the first pool, 2/3 of the incoming requests are diverted to FRS1, 1/3 of the incoming requests is diverted to FRS2. Within the second pool, ½ of the incoming requests are diverted to FRS3 and ½ of the incoming requests are diverted to FRS4. This results in that a total of 2/3^{∗}2/3= 4/9 of the incoming requests are diverted to FRS1, 2/3^{∗}1/3= 2/9 is diverted to FRS2, 1/3^{∗}1/2=1/6 is diverted to FRS3 and 1/3^{∗}1/2=1/6 is diverted to FRS4. Such diversity of the distribution of the file repair request may be particularly advantageous in case the different individual File Repair Servers have different capacity. A high capacity File Repair Server may then handle 1/3 of the incoming file repair requests whereas a low capacity File Repair Server may then handle 1/6 of the incoming file repair requests. The diversion of incoming requests for file repair to the individual File Repair Servers in the pool will be described in more detail below.

There may only be one single pool of File Repair Servers. In such a case, the UE will only have one "place" to send the request to file repair, and that is to the one pool of a plurality of File Repair Servers. This means that there will be functionality at the pool in order to distribute incoming requests for file repair to the individual File Repair Servers in the pool. Such a solution will be described in more detail below.

Examples herein also relate to a method in a File Repair Server, operable in a wireless communication network supporting Multimedia Broadcast/Multicast service, for updating a Status Management Server regarding a current status of the File Repair Server. An example of such a method is illustrated in figure 2.

Figure 2 illustrates the method 200 in the File Repair Server for updating a Status Management Server regarding a current status of the File Repair Server comprising determining 210 the current status of the File Repair Server and transmitting 220 a status report of the File Repair Server to the Status Management Server, thereby enabling the Status Management Server to balance a load situation for at least the File Repair Server.

The File Repair Server is enabled to monitor its current status with regard to usage, load, capacity and/or rate of incoming requests for file repair. The File Repair Server may in an example be equipped with a Status Module adapted to perform the monitoring. By monitoring the current status, the File Repair Server may determine the current status of the File Repair Server, which may also be done by means of the Status Module. Once the File Repair Server has determined its current status, the File Repair Server transmits the status report to a Status Management Server. The Status Management Server will receive status reports from a plurality of individual File Repair Servers and may evaluate the different status reports to obtain an overview of the current status for all the File Repair Servers. Thereby, the Status Management Server will gain information in order to determine that some File Repair Server is more heavily loaded than others and consequently balance the load situation for the File Repair Servers.

The method in the File Repair Server has several advantages. Since the Status Management Server is provided with information regarding the current status of individual File Repair Servers, the Status Management Server is enabled to distribute this information to the UEs. In this manner, the UEs are aware of the status of individual File Repair Servers and may select a File Repair Server such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

According to an example, determining 210 the current status comprises monitoring the File Repair Server and analysing the current load and the capacity of the File Repair Server.

As described above, the File Repair Server may determine its current status with regard to e.g. usage, load, capacity and/or rate of incoming requests for file repair by monitoring itself. The monitoring may be done by e.g. a Status Module of the File Repair Server.

The File Repair Server, or the Status Module of the File Repair Server, reports in an example the current status of the File Repair Server periodically. Alternatively, in another example, the File Repair Server, or the Status Module of the File Repair Server, reports the current status of the File Repair Server based on the occurrence of an event, when an important event is soon to happen or has just happened, e.g. when a risk of a possible overload of the File Repair Server is imminent. Another example of an event is when a load on a processing unit of the File Repair Server reaches a predetermined threshold, e.g. 75% of the processing capacity of the processing unit. Alternatively, the File Repair Server may report its current status regularly, e.g. once every millisecond.

One example of how to monitor the current status with regard to e.g. usage, load, capacity and/or rate of incoming requests for file repair, is to monitor the load on a processing unit of the File Repair Server, to monitor a current usage of buffers of the File Repair Server.

Examples herein also relate to a Load Balancing Server, operable in a wireless communication network supporting Multimedia Broadcast/Multicast service, for selecting a File Repair Server to perform a file repair procedure.

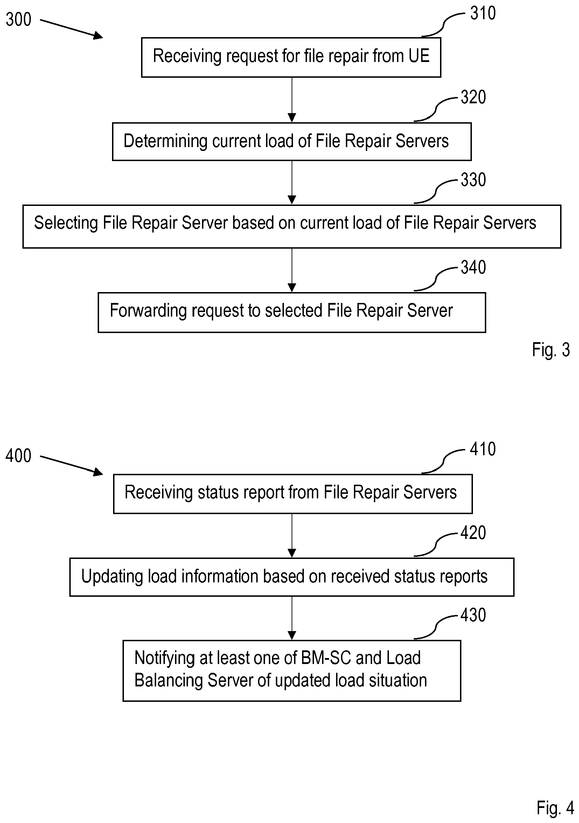

Figure 3 is a flowchart of a method in a Load Balancing Server for selecting a File Repair Server to perform a file repair procedure according to an example. The Load Balancing Server is associated with a plurality of File Repair Servers.

Figure 3 illustrates the method comprising receiving 310, from a UE, a request for file repair procedure, and determining 320, a current load and/or capacity situation of the File Repair Servers. The method further comprises selecting 330 a File Repair Server based on the current load and/or capacity situation of the File Repair Servers; and forwarding 340 the request for file repair procedure to the selected File Repair Server.

The Load Balancing Server is associated with a plurality of File Repair Servers, in other words, the Load Balancing Server is associated with one or more pools of a plurality of File Repair Servers. Such a solution may comprise that a UE requesting file repair will send the file repair request to the Load Balancing Server in order to be routed to a File Repair Server. So even though the UE can be said to send the file repair request to a File Repair Server, the UE does so via an intermediate Load Balancing Server. To the UE, the Load Balancing Server is a File Repair Server, and can thus be said to be a virtual File Repair Server from the UE point of view. The Load Balancing Server receives a request for file repair procedure from the UE. The Load Balancing Server has knowledge about a current status of the File Repair Servers, which will be described in more detail below in conjunction with figure 4. Since the Load Balancing Server has knowledge about a current status of the File Repair Servers, the Load Balancing Server is enabled to selecting 330 a File Repair Server based on the current load and/or capacity situation of the File Repair Servers. The Load Balancing Server may select the File Repair Server having the lowest load or highest capacity among the File Repair Servers, and/or it may avoid selecting the File Repair Server having the highest load or lowest capacity among the File Repair Servers. Once the Load Balancing Server has selected a File Repair suitable for handling the incoming file repair request, i.e. a File Repair Server suitable for partaking in the file repair procedure, the Load Balancing Server forwards the request for file repair procedure to the selected File Repair Server.

The method in the Load Balancing Server has several advantages. Since the Status Management Server is provided with information regarding the current status of individual File Repair Servers, the Load Balancing Server is provided with information regarding the status of individual File Repair Servers, the Load Balancing Server may select a File Repair Server such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

According to an example, determining 320 the current load and/or capacity situation of the File Repair Servers comprises receiving, from a Status Management Server, a status update message comprising information on load and/or capacity of File Repair Servers.

As described above, the individual File Repair Servers send status reports of the File Repair Server to the Status Management Server. The Status Management Server will thereby be enabled to have an overview of all reporting File Repair Servers. The Status Management Server will in this example send the information regarding load and/or capacity of the File Repair Servers to the Load Balancing Server. In this manner, the Load Balancing Server is enabled to determine the current load and/or capacity situation of the File Repair Servers.

Examples herein also relate to a method in a Status Management Server, operable in a wireless communication network supporting Multimedia Broadcast/Multicast service, for balancing a load of at least two File Repair Servers in the wireless communication network.

An example of such a method is illustrated in figure 4.

Figure 4 illustrates the method 400 in a Status Management Server comprising receiving 410 status reports from the File Repair Servers; and updating 420 load information in the Status Management Server regarding a current load situation of the File Repair Servers based on the received status reports. The method also comprises notifying 430 at least one of a BM-SC and a Load Balancing Server about the updated load situation of the File Repair Servers.

As described above, the File Repair Servers send status reports to the Status Management Server. The status reports may comprise information regarding a current load and/or capacity of the individual File Repair Servers. The Status Management Server updates load and/or capacity information in the Status Management Server regarding a current load/capacity situation of the File Repair Servers based on the received status reports. In this manner, the Status Management Server is provided with information enabling the Status Management Server to keep the information about a current situation for the reporting File Repair Servers updated. In order for the information to be used for balancing the load of the File Repair Servers, the Status Management Server notifies at least one of the BM-SC and the Load Balancing Server about the updated load situation of the File Repair Servers.

Depending on the implementation, the Status Management Server notifies one or both of the BM-SC and the Load Balancing Server about the updated load situation of the File Repair Servers. In an implementation where the UE only sends requests for file repair to one single pool of File Repair Servers, only the Load Balancing Server for that single pool needs to be updated. Likewise in an implementation where the UE randomly selects a pool of File Repair Servers among a plurality of pools of File Repair Servers, only the Load Balancing Servers of the pools of File Repair Servers need to be updated. However, in an implementation where the UE is provided with the information of the current status information regarding the different File Repair Server, then the BM-SC needs to be notified in order to provide the information to the UE. Otherwise the UE would not be able to select a File Repair Server to send the file repair request to. In still an implementation where the UE is enabled to select a pool of File Repair Server among a plurality of pool (at least two), the UE need the information to select a pool and the Load Balancing Servers need the information in order to select a File Repair Server in the pool to forward an incoming file repair request to. In such an implementation, both the BM-SC and the Load Balancing Server(s) need to be notified.

The method in the Status Management Server has several advantages. Since the Status Management Server is provided with information regarding the current status of individual File Repair Servers, the Status Management Server provides this information to the Load Balancing Server and/or the BM-SC. Thereby, the Load Balancing Server or the UE may select a File Repair Server and/or pool of File Repair Servers such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

According to an example, the Status Management Server receives the status reports from the File Repair Servers as a response to a request from the Status Management Server for the status reports.

In such an example, the Status Management Server may at any time request status reports from one, several, or all File Repair Servers in order to update its information about the current status of individual File Repair Servers.

Alternatively, the individual File Repair Servers send status reports regularly, continuously (e.g. every millisecond, every five millisecond, every 20 millisecond, every second), or when an individual File Repair Server detects a change in e.g. load and/or capacity. In the latter example, only when e.g. the load of a File Repair Server changes, drops or increases, the File Repair Server sends a status report to the Status Management Server. Alternatively, only when e.g. the load of a File Repair Server changes in such a manner that a threshold is reached, will the File Repair Server send a status report to the Status Management Server.

According to still an example, the Status Management Server is comprised in the BM-SC.

The Status Management Server is in this example integrated in the BM-SC. In an alternative solution, the Status Management Server is a stand-alone apparatus or node.

Examples herein also relate to a method in a BM-SC, for informing a UE about a current load and/or capacity of File Repair Servers available for the UE for a file repair procedure.

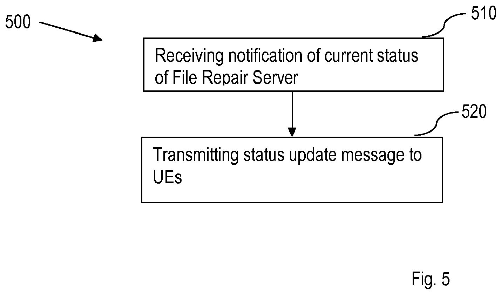

An example of such a method is illustrated in figure 5.

Figure 5 illustrates the method 500 in the BM-SC for informing a UE(s) about a current load and/or capacity of File Repair Servers available for the UE(s) for a file repair procedure comprising receiving 510 a notification from a Status Management Server regarding a current load situation of the File Repair Servers; and transmitting 520, to the UE(s), a status update message comprising information on load and/or capacity of File Repair Servers available for the UE(s). In a MBMS session, data is broadcasted or multicasted to a plurality of UEs. Hence, the BM-SC informs the plurality of UEs about the current load and/or capacity of File Repair Servers available for the UEs for a file repair procedures.

The Status Management Server has been described above to receive status reports from individual File Repair Servers and to notify, or inform, the BM-SC about a current load and/or capacity of File Repair Servers available for the UE for a file repair procedure. This enables the BM-SC in turn to inform the UEs about the situation by transmitting a status update message comprising information on load and/or capacity of File Repair Servers to the UEs.

The method in the BM-SC has several advantages. Since the Status Management Server provides the BM-SC with information regarding the current status of individual File Repair Servers, the BM-SC is enabled to provide this information to the UE(s). Thereby, a UE may select a File Repair Server and/or pool of File Repair Servers, based on the provided information, such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

Embodiments herein also relate to a UE adapted for initiating a file repair procedure following a Multimedia Broadcast/Multicast service session. The UE has the same technical features, objects and advantages as the method perform therein, or performed by the UE. Hence, the UE will be described in brief in order to avoid unnecessary repetition.

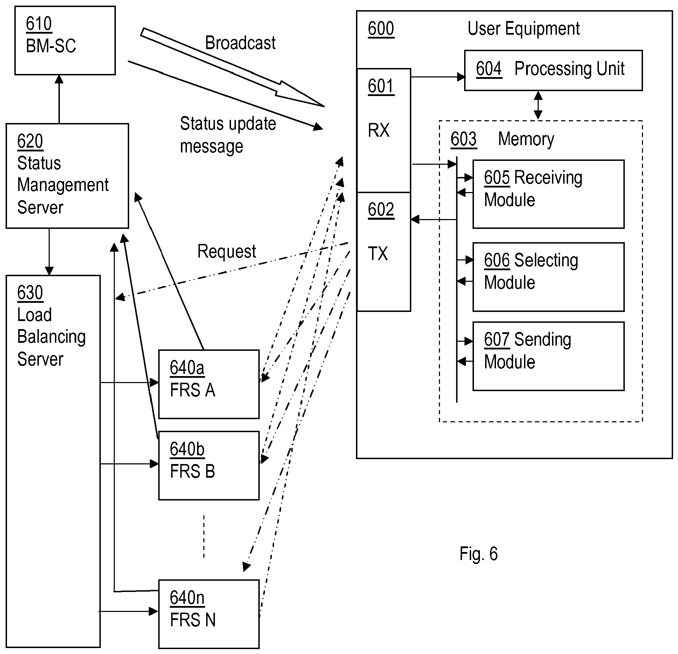

Figure 6 is a block diagram of a UE adapted for initiating a file repair procedure according to an exemplifying embodiment.

Figure 6 illustrates the UE 600 comprising a processing unit 604 and a memory 603 capable of storing instructions which when executed by the processing unit 604 causes the processing unit 604 to receive, from a BM-SC a status update message comprising information on load and/or capacity of File Repair Servers available for the UE; to select a File Repair Server to request a file repair procedure from based on the status update message; and to send a file repair request to the selected File Repair Server.

The UE has several advantages. The UE is aware of the status of individual File Repair Servers and may select a File Repair Server such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

Figure 6 is an exemplifying illustration of the UE 600. The UE may comprise additional or other modules and/or units than illustrated in figure 6. Figure 6 illustrates the UE further comprising a receiving unit 601 and a transmitting unit 602. These units may be one and the same or it may comprise several individual units or devices. For example, the two units 601 and 602 may comprise one or more antenna arrangements by means of which the UE 600 communicates with e.g. a BM-SC, a File Repair Server or any other node or point in the communication network. By means of these units, the UE 600 is adapted to receive, from a BM-SC a status update message comprising information on load and/or capacity of File Repair Servers available for the UE which is inputted to the processing unit.

According to an embodiment, the status update message is pushed from the BM-SC to the UE.

According to still an embodiment, the memory is further capable of storing instructions which when executed by the processing unit 604 causes the processing unit 604 to request status update information transmitted from the UE to the BM-SC, wherein the status update message from the BM-SC is received as a result of the foregoing request for status update information transmitted from the UE to the BM-SC.

According to yet an embodiment, the status update message is received by means of an extended ADPD update.

According to an example, the status update message is received by means of an extended SPD update.

According to another embodiment, the status update message comprises information pertaining to, for individual available File Repair Servers, a ratio of requests that is handled by individual File Repair Servers.

Examples herein also relate to a File Repair Server, operable in a wireless communication network supporting Multimedia Broadcast/Multicast service, adapted for updating a Status Management Server regarding a current status of the File Repair Server. The File Repair Server has the same technical features, objects and advantages as the method perform therein, or performed by the File Repair Server. Hence, the File Repair Server will be described in brief in order to avoid unnecessary repetition.

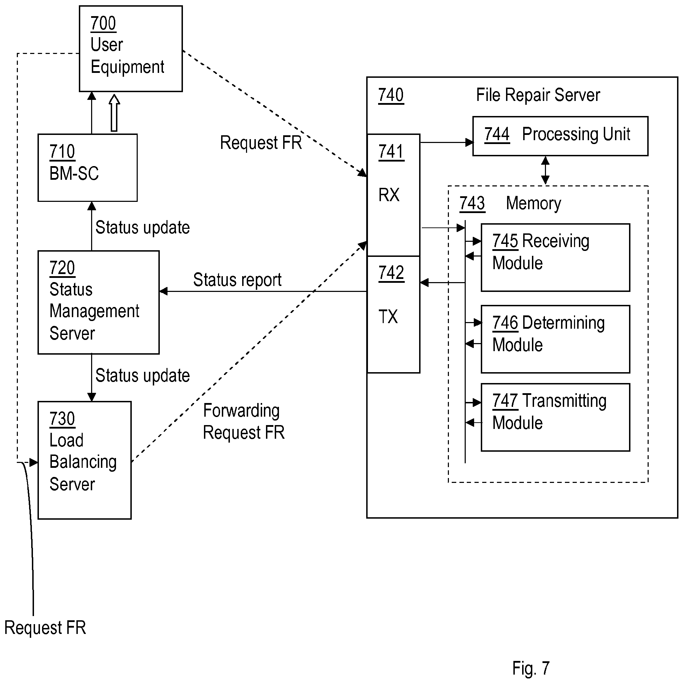

Figure 7 is a block diagram of a File Repair Server adapted for updating a Status Management Server regarding a current status of the File Repair Server according to an example.

Figure 7 illustrates the File Repair Server 740 comprising a processing unit 744 and a memory 743 capable of storing instructions which when executed by the processing unit 744 causes the processing unit 744 to determine the current status of the File Repair Server; and to transmit a status report of the File Repair Server to the Status Management Server, thereby enabling the Status Management Server to balance a load situation for at least the File Repair Server.

The File Repair Server has several advantages. Since the Status Management Server is provided with information regarding the current status of individual File Repair Servers, the Status Management Server is enabled to distribute this information to the UEs. In this manner, the UEs are aware of the status of individual File Repair Servers and may select a File Repair Server such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

Figure 7 is an exemplifying illustration of the File Repair Server 740. The File Repair Server 740 may comprise additional or other modules and/or units than illustrated in figure 7. Figure 7 illustrates the File Repair Server 740 further comprising a receiving unit 741 and a transmitting unit 742. These units may be one and the same or it may comprise several individual units or devices. For example, the two units 741 and 742 may comprise one or more antenna arrangements by means of which the File Repair Server 740 communicates with e.g. a UE 700, a Status Management Server 720, a Load Balancing Server 730 or any other node or point in the communication network.

According to an example, the memory 743 is further capable of storing instructions which when executed by the processing unit 744 causes the processing unit 744 to monitor the File Repair Server and analysing the current load and the capacity of the File Repair Server thereby determining the current status of the File Repair Server.

Examples herein also relate to a Load Balancing Server, operable in a wireless communication network supporting Multimedia Broadcast/Multicast service, adapted for selecting a File Repair Server to perform a file repair procedure, the Load Balancing Server being associated with a plurality of File Repair Servers. The Load Balancing Server has the same technical features, objects and advantages as the method perform therein, or performed by the Load Balancing Server. Hence, the Load Balancing Server will be described in brief in order to avoid unnecessary repetition.

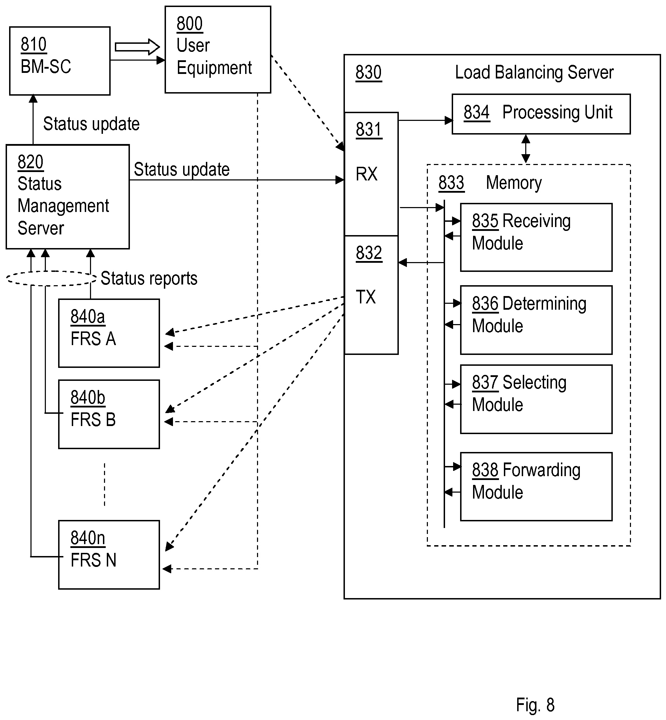

Figure 8 is a block diagram of a Load Balancing Server adapted for selecting a File Repair Server to perform a file repair procedure according to an example.

Figure 8 illustrates the Load Balancing Server 830 comprising a processing unit 834 and a memory 833 capable of storing instructions which when executed by the processing unit 834 causes the processing unit 834 to receive, from a UE, a request for file repair procedure; to determine a current load and/or capacity situation of the File Repair Servers; to select a File Repair Server based on the current load and/or capacity situation of the File Repair Servers; and to forward the request for file repair procedure to the selected File Repair Server.

The Load Balancing Server has several advantages. Since the Status Management Server is provided with information regarding the current status of individual File Repair Servers, the Load Balancing Server is provided with information regarding the status of individual File Repair Servers, the Load Balancing Server may select a File Repair Server such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

Figure 8 is an exemplifying illustration of the Load Balancing Server 830. The Load Balancing Server 830 may comprise additional or other modules and/or units than illustrated in figure 8. Figure 8 illustrates the Load Balancing Server 830 further comprising a receiving unit 831 and a transmitting unit 832. These units may be one and the same or it may comprise several individual units or devices. For example, the two units 831 and 832 may comprise one or more antenna arrangements by means of which the Load Balancing Server 830 communicates with e.g. a Status Management Server, a UE, a File Repair Server or any other node or point in the communication network. By means of these units, the Load Balancing Server 830 is adapted to receive, from a UE, a request for file repair procedure which is inputted to the processing unit.

According to an example, the memory is further capable of storing instructions which when executed by the processing unit 834 causes the processing unit 834 to receive, from a Status Management Server, a status update message comprising information on load and/or capacity of File Repair Servers, thereby determining the current load and/or capacity situation of the File Repair Servers.

Examples herein also relate to a Status Management Server, operable in a wireless communication network supporting Multimedia Broadcast/Multicast service, adapted for balancing a load of at least two File Repair Servers in a wireless communication network. The Status Management Server has the same technical features, objects and advantages as the method perform therein, or performed by the Status Management Server. Hence, the Status Management Server will be described in brief in order to avoid unnecessary repetition.

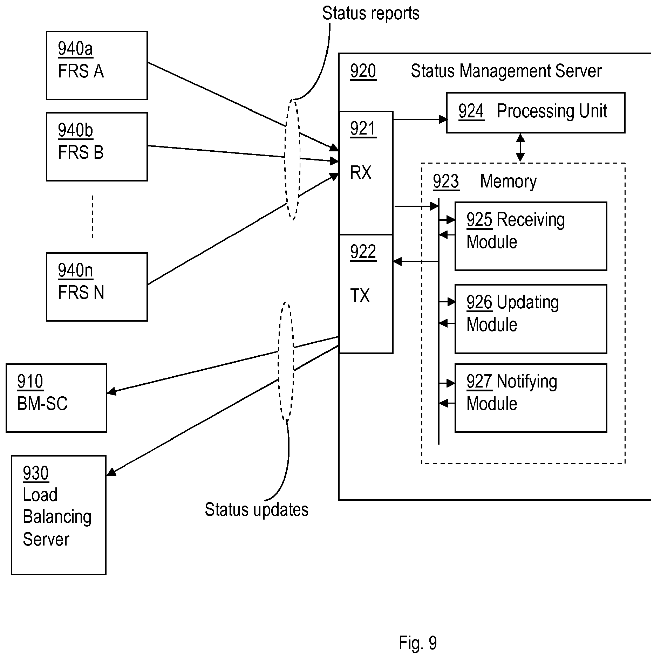

Figure 9 is a block diagram of a Status Management Server adapted for balancing a load of N File Repair Servers according to an example, wherein N is at least two.

Figure 9 illustrates the Status Management Server comprising a processing unit 924 and a memory 923 capable of storing instructions which when executed by the processing unit 924 causes the processing unit 924 to receive status reports from the File Repair Servers; to update load information in the Status Management Server regarding a current load situation of the File Repair Servers based on the received status reports; and to notify a Broadcast Multicast Service Centre, BM-SC about the updated load situation of the File Repair Servers.

The Status Management Server has several advantages. Since the Status Management Server is provided with information regarding the current status of individual File Repair Servers, the Status Management Server provides this information to the Load Balancing Server and/or the BM-SC. Thereby, the Load Balancing Server or the UE may select a File Repair Server and/or pool of
File Repair Servers such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

Figure 9 is an exemplifying illustration of the Status Management Server 920. The Status Management Server 920 may comprise additional or other modules and/or units than illustrated in figure 9. Figure 9 illustrates the Status Management Server 920 further comprising a receiving unit 921 and a transmitting unit 922. These units may be one and the same or it may comprise several individual units or devices. For example, the two units 921 and 922 may comprise one or more antenna arrangements by means of which the Status Management Server 920 communicates with e.g. a BM-SC 910, a Load Balancing Server 930 a File Repair Server 940a-940n or any other node or point in the communication network. By means of these units, the Status Management Server 920 is adapted to receive status reports from the File Repair Servers which are inputted to the processing unit.

According to an example, the memory 923 is further capable of storing instructions which when executed by the processing unit 924 causes the processing unit 924 to request status reports from the File Repair Servers, wherein the Status Management Server receives the status reports from the File Repair Servers as a response to the request(s).

According to yet an example, the Status Management Server is comprised in the BM-SC.

Examples herein also relate to a BM-SC adapted for informing a UE about a current load and/or capacity of File Repair Servers available for the UE for a file repair procedure. The BM-SC has the same technical features, objects and advantages as the method perform therein, or performed by the BM-SC. Hence, the BM-SC will be described in brief in order to avoid unnecessary repetition.

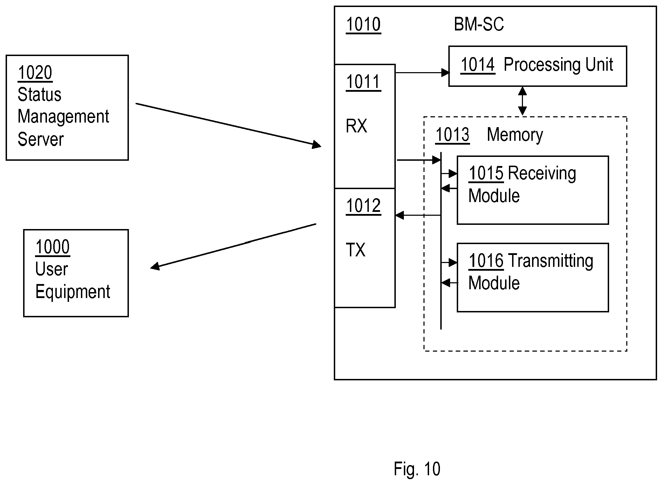

Figure 10 is a block diagram of a BM-SC adapted for informing a UE about a current load and/or capacity of File Repair Servers available for the UE for a file repair procedure according to an example.

Figure 10 illustrates the BM-SC 1010 comprising a processing unit 1014 and a memory 1013 capable of storing instructions which when executed by the processing unit 1014 causes the processing unit 1014 to receive a notification from a Status Management Server regarding a current load situation of the File Repair Servers; and to transmit, to the UE, a status update message comprising information on load and/or capacity of File Repair Servers available for the UE.

The BM-SC has several advantages. Since the Status Management Server provides the BM-SC with information regarding the current status of individual File Repair Servers, the BM-SC is enabled to provide this information to the UE(s). Thereby, the UE may select a File Repair Server and/or pool of File Repair Servers such that probability for the File Repair Server rejecting the request for file repair is reduced. Another advantage is that the load across the individual File Repair Servers may be more homogeneously distributed at least in situations in which the overall load of the File Repair Servers are relatively high. Still an advantage is that the signalling load over the air may be reduced.

Figure 10 is an exemplifying illustration of the BM-SC 1010. The BM-SC 1010 may comprise additional or other modules and/or units than illustrated in figure 10. Figure 10 illustrates the BM-SC 1010 further comprising a receiving unit 1011 and a transmitting unit 1012. These units may be one and the same or it may comprise several individual units or devices. For example, the two units 1011 and 1012 may comprise one or more antenna arrangements by means of which the BM-SC 1010 communicates with e.g. a Status Management Server 1020, a UE 1000 or any other node or point in the communication network. By means of these units, the BM-SC 1010 is adapted to receive a notification from a Status Management Server regarding a current load situation of the File Repair Servers which are inputted to the processing unit.

In figures 6-10, the UE 600, the File Repair Server 740, the Load Balancing Server 830, the Status Management Server 920 and the BM-SC 1010 are illustrated respectively comprising a memory 603, 743, 833, 923 and 1013 for storing data. Further, the UE 600, the File Repair Server 740, the Load Balancing Server 830, the Status Management Server 920 and the BM-SC are illustrated respectively comprising a processing unit 604, 744, 834, 924, and 1014 which in turn respectively comprises the different modules 605-607, 745-747, 835-838, 925-927 and 1015-1016. It shall be pointed out that these are merely illustrative examples and the UE 600, the File Repair Server 740, the Load Balancing Server 830, the Status Management Server 920 and the BM-SC 1010 may comprise more, less or other units or modules which execute the functions of the UE 600, the File Repair Server 740, the Load Balancing Server 830, the Status Management Server 920 and the BM-SC 1010 in the same manner as the units illustrated in figures 6-10.

It should be noted that figures 6-10 merely illustrate various functional units in the UE 600, the File Repair Server 740, the Load Balancing Server 830, the Status Management Server 920 and the BM-SC 1010 respectively in a logical sense. The functions in practice may be implemented using any suitable software and hardware means/circuits etc. Thus, the embodiments/examples are generally not limited to the shown structures of the UE 600, the File Repair Server 740, the Load Balancing Server 830, the Status Management Server 920 and the BM-SC 1010 respectively and the functional units. Hence, the previously described exemplary embodiments/examples may be realised in many ways. For example, one respective embodiment/example of the UE 600, the File Repair Server 740, the Load Balancing Server 830, the Status Management Server 920 and the BM-SC 1010 includes a computer-readable medium having instructions stored thereon that are executable by the respective processing unit for executing the method steps in the UE 600, the File Repair Server 740, the Load Balancing Server 830, the Status Management Server 920 and the BM-SC 1010 respectively. The instructions executable by the computing system and stored on the computer-readable medium perform the method steps of the present invention as set forth in the claims.

Figures 6-10 schematically show an embodiment/example of the UE 600, the File Repair Server 740, the Load Balancing Server 830, the Status Management Server 920 and the BM-SC 1010 respectively. Comprised in the UE 600, the File Repair Server 740, the Load Balancing Server 830, the Status Management Server 920 and the BM-SC 1010 are here a respective processing unit 604, 744, 834, 924, and 1014, e.g. with a DSP (Digital Signal Processor). The respective processing unit 604, 744, 834, 924, and 1014 may be a single unit or a plurality of units to perform different actions of procedures described herein. The UE 600, the File Repair Server 740, the Load Balancing Server 830, the Status Management Server 920 and the BM-SC 1010 may also respectively comprise an input unit for receiving signals from other entities, and an output unit for providing signal(s) to other entities. The input unit and the output unit may be arranged as an integrated entity or as illustrated in the example of figures 6-10, as one or more interfaces 601, 602, 741, 742, 831, 832, 921, 922, 1011, and 1012.

Furthermore, the UE 600, the File Repair Server 740, the Load Balancing Server 830, the Status Management Server 920 and the BM-SC 1010 respectively comprises at least one computer program product in the form of a non-volatile memory, e.g. an EEPROM (Electrically Erasable Programmable Read-Only Memory), a flash memory and a hard drive. The computer program product comprises a computer program, which comprises code means, which when executed in the respective processing unit 604, 744, 834, 924, and 1014 in the UE 600, the File Repair Server 740, the Load Balancing Server 830, the Status Management Server 920 and the BM-SC 1010 causes the UE 600, the File Repair Server 740, the Load Balancing Server 830, the Status Management Server 920 and the BM-SC 1010 to perform the respective actions e.g. of the respective procedures described earlier in conjunction with figures 1-5.

The respective computer program may be configured as a computer program code structured in computer program modules.

The respective computer program modules could essentially perform the actions of the respective flows illustrated in figures 1-5, to emulate the UE 600, the File Repair Server 740, the Load Balancing Server 830, the Status Management
Server 920 and the BM-SC 1010 respectively. In other words, when the different computer program modules are executed by the respective processing unit 604, 744, 834, 924, and 1014, they may correspond to the respective modules 605-607, 745-747, 835-838, 925-927 and 1015-1016 of figures 6-10.

Although the code means in the examples disclosed above in conjunction with figures 6-10 are implemented as computer program modules which when executed in the processing unit causes the UE 600, the File Repair Server 740, the Load Balancing Server 830, the Status Management Server 920 and the BM-SC 1010 to perform the respective actions described above in the conjunction with figures mentioned above, at least one of the code means may in alternative examples be implemented at least partly as hardware circuits, such that e.g. in Fig. 6 the Receiving module 605 is replaced by a receiving unit, the selecting module 606 is replaced by a Selecting unit and the Sending module 607 is replaced by a Sending unit. Remaining devices may be configured in a corresponding way.

Each of the processor, or processing units mentioned above, may be configured as a single CPU (Central processing unit) on a single chip, or as two or more processing units. For example, the processor may include general purpose microprocessors; instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product may comprise a computer readable medium on which the computer program is stored. For example, the computer program product may be a flash memory, a RAM (Random-access memory) ROM (Read-Only Memory) or an EEPROM, and the computer program modules described above could in an alternative examples be distributed on different computer program products in the form of memories within any of the UE 600, the File Repair Server 740, the Load Balancing Server 830

In case any of the entities described above comprises a computer program product, one or more of the respective memories 603, 743, 833, 923, and 1013 of the UE 600, the File Repair Server 740, the Load Balancing Server 830, the Status Management Server 920 and the BM-SC may be replaced by at least one computer program product in the form of a non-volatile memory or volatile memory, e.g. an EEPROM (Electrically Erasable Programmable Read-only Memory), a flash memory, a disk drive or a RAM (Random-access memory).

According to yet another example, one or more of the modules described above may alternatively be configured as a corresponding hardware unit which is configured to execute the respective functionality under supervision of the respective processor or processing unit.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

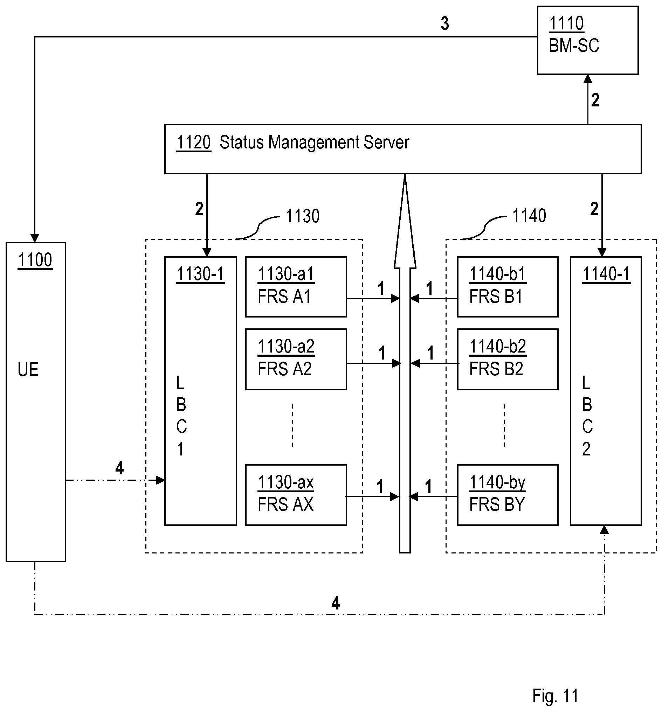

Figure 11 is a schematic illustration of a UE, a BM-SC, a Status Management Server and two pools or groups of File Repair Servers. Figure 11 illustrates two pools of File Repair Servers 1130 and 1140, wherein the first pool 1130 comprises a Load Balancing Server 1130-1 and x number of File Repair Servers 1130-a1 to 1130-ax. The second pool 1140 comprises a Load Balancing Server 1140-1 and y number of File Repair Servers 1140-b1 to 1140-by.

Each of the File Repair Servers individually determines the current status of itself and transmits a status report to a Status Management Server 1120, which is illustrated in figure 11 by arrows having a bold **"1"** from each File Repair Server to a large vertical arrow pointing to the Status Management Server 1120.

The Status Management Server 1120 receives **"1"** the plurality of status reports and updates load information in the Status Management Server 1120 regarding a current load situation based on the received status reports from the
plurality of File Repair Servers and notifies at least one of the BM-SC 1110 and the Load Balancing Servers 1130-1, 1140-1 about the updated load situation of the File Repair Servers. Figure 11 illustrates the Status Management Server 1120 notifying the BM-SC 1110 and/or the Load Balancing Servers 1130-1, 1140-1 by arrows having a bold **"2".**

The BM-SC 1110 receives **"2"** the notification from the Status Management Server 1120 and transmits a status update message comprising information on load and/or capacity of the File Repair Servers to the UE 1100, which is illustrated by the arrow from the BM-SC 1110 to the UE 1100 having a bold **"3".**

Figure 11 illustrates the UE 1100 receiving **"3"** the status update message from the BM-SC 1110. When the UE need to request a file repair procedure from a File Repair Server, the UE selects one File Repair Server to request the file repair procedure from, based on the information carried in the status update message from the BM-SC 1110. Then the UE 1100 sends the file repair request to the selected File Repair server, which is illustrated in figure 11 by dotted lines having a bold **"4"** to the Load Balancing Servers 1130-1 and 1140-1. The reason for the lines to the Load Balancing Servers 1130-1 and 1140-1 being dotted is that the UE 1100 selects one of the pools in this example, and send the request to the selected pool. In case figure 11 only had File Repair Servers 1130-a1 to 1130-ax and no Load Balancing Server (i.e. no 1130-1 and 1140-1) and not the File Repair Servers 1140-b1 to 1140-by, then figure 11 would have dotted lines having a bold **"4"** to each and every one of the File Repair Servers 1130-a1 to 1130-ax, wherein the lines being dotted would indicate that the UE 1100 selects one of the x number of File Repair Servers 1130-a1 to 1130-ax.

Figure 11 further illustrates the Load Balancing Server 1130-1 *or* 1140-1 receiving **"4"** the request for file repair from the UE 1100. The Load Balancing Server 1130-1 *or* 1140-1 determines a current load and/or capacity situation of the File Repair Servers 1130-a1 to 1130-ax *or* 1140-b1 to 1140-by, based on the received **2"** notification from the Status Management Server 1120. The Load Balancing Server 1130-1 *or* 1140-1 selects a File Repair Server and forwards the request for file repair to the selected File Repair Server.

While the embodiments have been described in terms of several embodiments, it is contemplated that alternatives, modifications, permutations and equivalents thereof will become apparent upon reading of the specification and study of the drawings. Further, the scope of the disclosure is defined by the attached claims. Furthermore, all the examples mentioned in the disclosure, as above, do not fall under the scope of the claim, and hence do not describe part of the claimed subject matter.

## Claims

1. A method to be performed in a system comprising a User Equipment, UE, and a Broadcast Multicast Service Centre, BM-SC, for initiating a file repair procedure following a Multimedia Broadcast/Multicast service session, **characterized in that**, the method comprises:
- receiving (110), from the BM-SC, a status update message comprising information on load and capacity of available File Repair Servers for the UE, wherein the status update message is received by means of an Association Delivery Procedure Description, ADPD, instance, wherein the ADPD instance is transmitted by the BM-SC to the UE when there is a change associated with at least one of the available File Repair Servers, and wherein the change comprises that a new File Repair Server is made available due to load corresponding to the new File Repair Server dropping below a threshold,
- selecting (120) at least one File Repair Server from the available File Repair Servers, to send a file repair request for the file repair procedure, based on the information carried in the status update message, and
- sending (130) the file repair request to the selected at least one File Repair Server.

2. The method (100) according to claim 1, wherein the status update message is pushed from the BM-SC to the UE.

3. The method according to any of claims 1 or 2, wherein the status update message from the BM-SC is received as a result of a foregoing request, for status information, transmitted from the UE to the BM-SC.

4. A system comprising a User Equipment, UE, (600) and a Broadcast Multicast Service Centre, BM-SC, (1010), adapted for initiating a file repair procedure following a Multimedia Broadcast/Multicast service session, the UE (600) comprising a processing unit (604) and a memory (603) capable of storing instructions, **characterized in that** the instructions when executed by the processing unit (604) causes the processing unit (604) to:
- receive, from the BM-SC (1010), a status update message comprising information on load and capacity of available File Repair Servers for the UE (600), wherein the status update message is received by means of an Association Delivery Procedure Description, ADPD, instance, wherein the ADPD instance is transmitted by the BM-SC (1010) to the UE (600) when there is a change associated with at least one of the available File Repair Servers, and wherein the change comprises that a new File Repair Server is made available due to load corresponding to the new File Repair Server dropping below a threshold,
- select at least one File Repair Server from the available File Repair Servers, to send a file repair request for the file repair procedure, based on the information carried in the status update message, and
- send the file repair request to the selected at least one File Repair Server.

5. The system according to claim 4, wherein the status update message is pushed from the BM-SC (1010) to the UE (600).

6. The system according to claim 4 or 5, wherein the memory (603) is further capable of storing instructions which, when executed by the processing unit (604), causes the processing unit (604) to request status information, and wherein the status update message from the BM-SC (1010) is received as a result of the foregoing request for the status information transmitted from the UE (600) to the BM-SC (1010).

## Patentansprüche

1. Verfahren, das in einem System durchzuführen ist, das eine Benutzereinrichtung, UE, und ein Broadcast Multicast Service Centre, BM-SC, zum Einleiten einer Dateireparaturprozedur nach einer Sitzung des Multimedia Broadcast/Multicast Service umfasst, **dadurch gekennzeichnet, dass** das Verfahren Folgendes umfasst:
- Empfangen (110) einer Statusaktualisierungsnachricht von dem BM-SC, die Informationen über Last und Kapazität verfügbarer Dateireparaturserver für das UE umfasst, wobei die Statusaktualisierungsnachricht mittels einer Instanz der Verknüpfungsbereitstellprozedurbeschreibung (Association Delivery Procedure Description), ADPD-Instanz, empfangen wird, wobei die ADPD-Instanz durch das BM-SC an die UE übertragen wird, wenn eine mit mindestens einem der verfügbaren Dateireparaturserver verknüpfte Änderung vorliegt, und wobei die Änderung umfasst, dass ein neuer Dateireparaturserver zur Verfügung gestellt wird, da die dem neuen Dateireparaturserver entsprechende Last unter einen Schwellenwert fällt,
- Auswählen (120) mindestens eines Dateireparaturservers aus den verfügbaren Dateireparaturservern, um basierend auf den in der Statusaktualisierungsnachricht enthaltenen Informationen eine Dateireparaturanforderung für die Dateireparaturprozedur zu senden, und
- Senden (130) der Dateireparaturanforderung an den ausgewählten mindestens einen Dateireparaturserver.

2. Verfahren (100) nach Anspruch 1, wobei die Statusaktualisierungsnachricht von dem BM-SC an die UE gepusht wird.

3. Verfahren nach einem der Ansprüche 1 oder 2, wobei die Statusaktualisierungsnachricht von dem BM-SC aufgrund einer vorhergehenden von der UE an das BM-SC übertragenen Anforderung von Statusinformationen empfangen wird.

4. System, umfassend eine Benutzereinrichtung, UE, (600) und ein Broadcast Multicast Service Centre, BM-SC, (1010), das geeignet ist, nach einer Sitzung des Multimedia Broadcast/Multicast Service eine Dateireparaturprozedur einzuleiten, wobei die UE (600) eine Verarbeitungseinheit (604) und einen zum Speichern von Anweisungen befähigten Speicher (603) umfasst, **dadurch gekennzeichnet, dass** die Anweisungen bei ihrer Ausführung durch die Verarbeitungseinheit (604), die Verarbeitungseinheit (604) dazu veranlassen:
- von dem BM-SC (1010) eine Statusaktualisierungsnachricht zu empfangen, die Informationen über Last und Kapazität verfügbarer Dateireparaturserver für das UE (600) umfasst, wobei die Statusaktualisierungsnachricht mittels einer Instanz der Verknüpfungsbereitstellprozedurbeschreibung, ADPD-Instanz, empfangen wird, wobei die ADPD-Instanz durch das BM-SC (1010) an die UE (600) übertragen wird, wenn eine mit mindestens einem der verfügbaren Dateireparaturserver verknüpfte Änderung vorliegt, und wobei die Änderung umfasst, dass ein neuer Dateireparaturserver zur Verfügung gestellt wird, da die dem neuen Dateireparaturserver entsprechende Last unter einen Schwellenwert fällt,
- mindestens einen Dateireparaturserver aus den verfügbaren Dateireparaturservern auszuwählen, um basierend auf den in der Statusaktualisierungsnachricht enthaltenen Informationen eine Dateireparaturanforderung für die Dateireparaturprozedur zu senden, und
- an den ausgewählten mindestens einen Dateireparaturserver die Dateireparaturanforderung zu senden.

5. System nach Anspruch 4, wobei die Statusaktualisierungsnachricht von dem BM-SC (1010) an die UE (600) gepusht wird.

6. System nach Anspruch 4 oder 5, wobei der Speicher (603) ferner befähigt ist, Anweisungen zu speichern, die bei ihrer Ausführung durch die Verarbeitungseinheit (604) die Verarbeitungseinheit (604) veranlassen, Statusinformationen anzufordern, und wobei die Statusaktualisierungsnachricht von dem BM-SC (1010) aufgrund der vorhergehenden von der UE (600) an das BM-SC (1010) übertragenen Anforderung von Statusinformation empfangen wird.

## Revendications

1. Procédé à mettre en œuvre dans un système comprenant un équipement utilisateur, UE, et un centre de service de diffusion/multidiffusion, BM-SC, pour lancer une procédure de réparation de fichier à la suite d'une session de service de diffusion/multidiffusion multimédia, **caractérisé en ce que,** le procédé comprend :
- la réception (110), depuis le BM-SC, d'un message de mise à jour de statut comprenant des informations concernant une charge et une capacité de serveurs de réparation de fichier disponibles pour l'UE, dans lequel le message de mise à jour de statut est reçu au moyen d'une instance de description de procédure de remise d'association, ADPD, dans lequel l'instance ADPD est transmise par le BM-SC à l'UE lorsqu'il y a un changement associé à au moins un des serveurs de réparation de fichier disponibles, et dans lequel le changement comprend le fait qu'un nouveau serveur de réparation de fichier est mis à disposition en raison d'une charge correspondant au nouveau serveur de réparation de fichier tombant en dessous d'un seuil,
- la sélection (120) d'au moins un serveur de réparation de fichier parmi les serveurs de réparation de fichier disponibles, pour envoyer une demande de réparation de fichier pour la procédure de réparation de fichier, sur la base des informations transportées dans le message de mise à jour de statut, et
- l'envoi (130) de la demande de réparation de fichier à l'au moins un serveur de réparation de fichier sélectionné.

2. Procédé (100) selon la revendication 1, dans lequel le message de mise à jour de statut est poussé du BM-SC vers l'UE.

3. Procédé selon l'une quelconque des revendications 1 ou 2, dans lequel le message de mise à jour de statut provenant du BM-SC est reçu en conséquence d'une demande qui précède, pour des informations de statut, transmises de l'UE au BM-SC.

4. Système comprenant un équipement utilisateur, UE, (600) et un centre de service de diffusion/multidiffusion, BM-SC, (1010), conçu pour lancer une procédure de réparation de fichier à la suite d'une session de service de diffusion/multidiffusion multimédia, l'UE (600) comprenant une unité de traitement (604) et une mémoire (603) capable de stocker des instructions, **caractérisé en ce que** les instructions lorsqu'elles sont exécutées par l'unité de traitement (604) amènent l'unité de traitement (604) à :
- recevoir, depuis le BM-SC (1010), un message de mise à jour de statut comprenant des informations concernant une charge et une capacité de serveurs de réparation de fichier disponibles pour l'UE (600), dans lequel le message de mise à jour de statut est reçu au moyen d'une instance de description de procédure de remise d'association, ADPD, dans lequel l'instance ADPD est transmise par le BM-SC (1010) à l'UE (600) lorsqu'il y a un changement associé à au moins un des serveurs de réparation de fichier disponibles, et dans lequel le changement comprend le fait qu'un nouveau serveur de réparation de fichier est mis à disposition en raison d'une charge correspondant au nouveau serveur de réparation de fichier tombant en dessous d'un seuil,
- sélectionner au moins un serveur de réparation de fichier parmi les serveurs de réparation de fichier disponibles, pour envoyer une demande de réparation de fichier pour la procédure de réparation de fichier, sur la base des informations transportées dans le message de mise à jour de statut, et
- envoyer la demande de réparation de fichier à l'au moins un serveur de réparation de fichier sélectionné.

5. Système selon la revendication 4, dans lequel le message de mise à jour de statut est poussé du BM-SC (1010) vers l'UE (600).

6. Système selon la revendication 4 ou 5, dans lequel la mémoire (603) est en outre capable de stocker des instructions qui, lorsqu'elles sont exécutées par l'unité de traitement (604), amènent l'unité de traitement (604) à demander des informations de statut, et dans lequel le message de mise à jour de statut provenant du BM-SC (1010) est reçu en conséquence de la demande qui précède pour les informations de statut transmise de l'UE (600) au BM-SC (1010).
